# EUROPEAN PATENT APPLICATION

(11) **EP 1 473 653 A1**
(43) Date of publication of application: **03.11.2004**
(21) Application number: 04018030.9
(22) Date of filing: 14.11.2001
(51) Int. Cl.: G06F 17/60

(54) **Targeted advertising method and system**

(30) Priority: 26.03.2001 US 817818
(62) Divisional of application: 01127029.5
(71) Applicant: Hewlett-Packard Company (a Delaware corporation), Palo Alto, CA 94304 (US)
(72) Inventor: Palmer, Donald J., Eagle Idaho 83616 (US); Caldwell, Lee G., Eagle 83616 Idaho (US)
(74) Representative: Schoppe, Fritz, Dipl.-Ing.

(57) **Abstract**

In a method and a system for providing targeted advertising to a customer on the basis of an advertisement selected from a plurality of advertisements, billing information for the customer is retrieved, an item of customer information relating to the customer is retrieved, the item of customer information is correlated to an advertisement, an advertisement is retrieved, and a billing statement containing the billing information for the customer and the advertisement is formed. Further, it is tracked which advertisements are sent to which customers, so that a customer is not sent a single advertisement repetitively to the exclusion of other suitable advert.

## Description

### Technical Field

The present invention relates to a system and method for providing a billing statement containing targeted advertising to consumers.

### Background of the Invention

Companies and other business entities may use any number of marketing methods to increase the exposure of consumers to their brands, goods or services. One common marketing method is the direct mailing of advertisements and other types of marketing collateral to consumers, generally packaged by itself, or may be packaged with another ordinarily mailed item, such as a billing statement Sending the advertising with a billing statement may often be preferable to sending it packaged by itself This is because packaging the advertisement with the billing statement lowers the costs of mailing the advertising and decreases the likelihood that a consumer will throw the envelope away without opening it to view the advertising.

Today, it is common for companies that send large numbers of billing statements to customers, such as utilities and credit card companies, to sell advertising space associated with the billing statements. For example, a company may sell advertising space in the form of a loose advertising insert within its billing statement envelopes, or in the form of tear-off advertising tabs attached to a return envelope included with the billing statement.

The use of advertising space within billing statement mailings may be an effective marketing tool, as it provides a channel for reaching a potentially large number of consumers. However, given the costs of printing the marketing collateral, current methods of sending the marketing collateral with the billing statements have some shortcomings. For example, many consumers may discard the marketing collateral without looking at it. Also, because the advertisements are mailed to each customer receiving a billing statement, it is inevitable that many advertisements will be sent to customers with little to no interest in the advertised business. Furthermore, the geographical extent over which customer bills are sent may be too broad for the method to be used with local or regional advertising.

### Summary of the Invention

The present invention provides a method for providing targeted advertising to a customer. The method includes the steps of retrieving billing information for the customer, retrieving an item of customer information relating to the customer; correlating the item of customer information to an advertisement; retrieving the advertisement; and forming a billing statement containing the billing information for the customer and the advertisement. The method may also include the steps of providing billing information for a collection of customers, collecting customer information, and providing a collection of advertisements from which the advertisement is selected.

### Brief Description of the Drawings

Fig. 1 is a flow diagram of a method of providing targeted advertising according to a first embodiment of the present invention.
Fig. 2 is a perspective view of a billing statement formed according to the method of Fig. 1, printed from a printer.
Fig. 3 is a schematic diagram of a billing system suitable for performing the method of claim 1.

### Detailed Description of the Preferred Embodiments

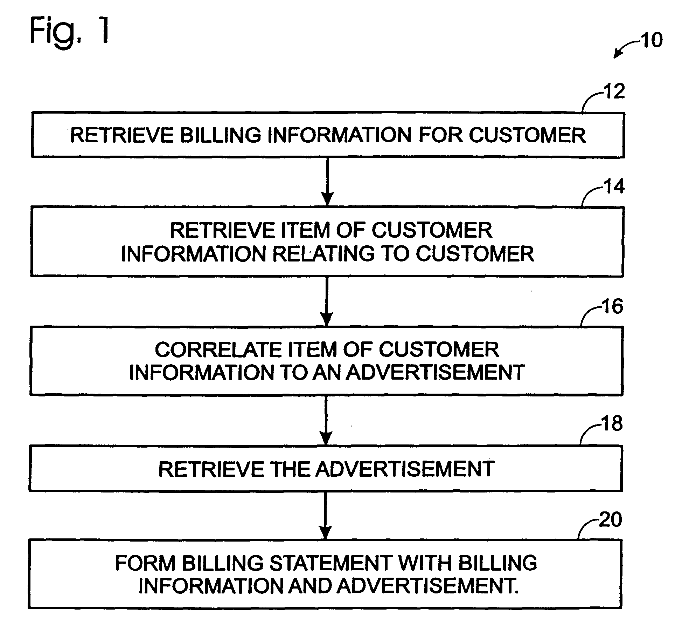

The present invention provides an improved method and system for sending advertisements and other marketing collateral with billing statement mailings in which an advertisement targeted for the customer receiving the billing statement is printed directly onto the billing statement A first embodiment of a method according to the present invention is illustrated generally at 10 in Fig. 1. Method 10 includes first retrieving billing information for a customer at 12, and then retrieving an item of customer information relating to the customer at 14. The item of customer information is then correlated to an advertisement at 16 to select an advertisement for delivery to the customer. Next, the advertisement is retrieved at 18, and a billing statement that contains both the billing information and the advertisement is formed at 20.

The step of retrieving billing information for the customer at 12 may be performed in any suitable fashion, depending upon the form in which the billing information is kept. For example, the billing information may be kept in paper or hard-copy form, in which case retrieving the billing information may include simply locating the billing information in a customer's file. Most often, however, the billing information will be kept in electronic form, for example, in a database. In this situation, retrieving the billing information will generally be performed by database management software. The software may retrieve the billing information automatically, such as during the periodic process of compiling customer bills, or under the instructions of a software operator, such as when a bill is prepared between billing cycles.

The billing information retrieved at step 12 may be any type of information regarding the customer's account For example, the billing information may be the information normally sent to the customer at the end of a billing period regarding payments received or due, or may be special information sent between billing periods, such as a store credit or a past due notice.

Method 10 may also include the step of providing the billing information. Many entities track their own customer accounts, and print and mail their own billing statements. In this situation, the entity typically provides its own billing information for a group of customers from which the billing information for the customer is retrieved. However, in some situations, an outside entity may perform some or all of the billing duties of the entity from which the customer purchased the goods or services, for example compiling and mailing the billing statements. In this situation, providing the billing information may include obtaining the billing statements from the entity from which the customer purchased the goods and services.

After retrieving the billing information for the customer at 12, an item of customer information related to the customer is retrieved at 14. The item of customer information indicates types of goods or services that the customer may have an interest in, and helps to select an advertisement to send to that customer. Any number of types of customer information may be potentially helpful in selecting an advertisement for a customer. Examples include demographic information, information on personal interests, and information regarding past consumptive behavior of the customer. Furthermore, any number of items of customer information may be retrieved for use in selecting an advertisement, and any number of different types of customer information may be used to select the same advertisement. Finally, as with the billing information, the item of customer information may be retrieved in any suitable fashion, but will typically be retrieved from an electronic database using suitable hardware or software.

Demographic information may be useful to help select an advertisement for a customer for several reasons. For example, some goods and services are intended for consumption by persons within a particular age range or persons of a particular sex. Thus, information about a customer's age and sex may be used to target advertising to those customers who are most likely to buy such goods and services. Other categories of demographic information, such as marital status, occupation, educational level, income level, and information regarding the customer's children (e.g. ages, sex, number of children) may also be used to select advertisements for particular types of goods or services for the customer. Demographic information may also be useful in allowing local or regional entities to target advertising to customers found in their business area. Examples of demographic information useful in this capacity include a customer's area code, telephone number, address and postal code.

A second type of information that may be useful in selecting an advertisement for a customer is information regarding the personal interests of the customer. This type of information may be of value in helping to select advertisements for goods or services that potentially appeal to consumers of a wide demographic range but of a more narrow range of interests. For example, goods related to cooking may appeal to people of either sex and of a broad range of ages, income levels, etc., yet not all people enjoy cooking. Thus, information regarding whether a customer likes to cook as a hobby would be useful in targeting advertisements for cooking-related goods to these people. Many other types of personal interests information may be useful in helping to select an advertisement for a customer. Examples include information regarding a customer's hobbies, interests, vacation and leisure preferences, spending habits, group affiliations, political affiliations and property ownership.

Another broad type of information of interest for targeted advertising is information regarding the past consumption of goods and services by consumers. This information allows the past consumption habits of individual customers to be directly examined, and thus gives insight into the types of goods or services in which the individual customers may be interested. Generally, this information relates to the past purchasing habits of consumers, though it may also take into account non purchasing consumption of goods and services, such as the utilization of free promotional offers. Several types of information regarding the past consumption of goods or services may be used. For example, an entity may keep records of all goods or services purchased by its customers. Thus, the identity of the goods and services purchased by the customer may be retrieved to allow advertisements for similar goods and services to be selected. Examples of other information regarding past consumption of goods and services include information regarding the identity of goods and services purchased by the customer from other entities or providers, and catalogs and mailings lists on which the customer's name appears.

In many instances, the customer information retrieved at 14 is information that is ordinarily possessed by the entity sending the billing statement For example, many entities require the name, sex, age, address, and telephone number (and possibly other information) for a new customer when opening an account. Furthermore, some entities, such as credit card companies, require information regarding the financial and occupational status of the customer, including information on spouses and dependents. Thus, many items of customer information will be readily available to the billing entity in its own records. However, other types of information described above, such as the personal interests of customers or information from other businesses regarding past consumption of goods and services by customers, may not be as readily available. In this case, method 10 may include the additional step of collecting customer information.

The customer information may be collected in any suitable manner. For example, information on the personal interests of a customer may be collected by survey. Such a survey may be conducted by the entity compiling the billing statement, or by an outside source. Likewise, information concerning past consumption of goods and services may be collected directly from customers, or obtained from an outside source, for example by purchasing catalog mailing lists.

After retrieving the item of customer information at 14, the item of customer information is correlated to an advertisement at 16 to determine a suitable advertisement to include on the billing statement of the customer. Typically, a collection of advertisements will be provided, from which the advertisement is selected. The collection of advertisements may be compiled by the entity issuing the billing statement, may be obtained either individually or collectively from an outside source, or in any other suitable manner.

The item of customer information and the advertisement may be correlated in any desired manner. For example, a particular item of customer information may be directly linked to a particular advertisement In this situation, the advertisement is automatically selected and retrieved whenever the particular item of customer information is retrieved. An example of this in a database context would be a hypertext link between a particular customer information file representing a product or service offered by the business and a particular advertising file. In this situation, when customer information is retrieved that contains the particular customer information file, the database management software could automatically retrieve the linked advertisement via the hypertext link.

Alternatively, the item of customer information may be correlated to an advertisement via a comparative method. This would ordinarily involve comparing the item or items of customer information to some sort of comparative data item associated with the advertisement. For example, the comparative data item may simply be a list of keywords associated with the interests of people targeted by the ad that may be compared to a list of interests or hobbies of the customer. The keyword list for each advertisement could be searched in any suitable manner. For example, in the database context, the database management software could first select an item of customer information in the form of a word that describes an interest of the customer, and then search the keyword list for the same word or words using search engine software. If the word is found in the keyword list, the advertisement could then be selected for the customer.

Rather than a keyword list, the comparative data item may include one or more simple preference indicators associated with particular customer preferences that indicate whether or not the advertisement is targeted to a customer with the particular preference. For example, the indicators may each represent whether a customer has an interest in a particular hobby. Each item of customer information would include its own set of indicators corresponding to the same hobbies as listed in the comparative data item. Thus, the set of indicators associated with the customer information could be compared to the set of indicators associated with the advertisement to correlate the item of customer information to the advertisement. In this manner, the advertisement with the most similar set of indicators to the customer information could be selected for the customer. Each set of indicators may have as many or as few indicators as desired. Furthermore, each indicator may be binary such that it indicates only whether or not the customer has in interest in the corresponding hobby, or may have multiple states so that it indicates the level of interest of the customer in the corresponding hobby.

When correlating the customer information to the advertisement, it may often be the case that more than one advertisement will be suitable for a particular customer. In this situation, the advertisements may be ranked based upon the strength of the correlation with the customer information, and then an advertisement with a desired rank may be selected. Alternatively, the advertisements may be selected sequentially in the order they were retrieved, or in any other desired manner. Furthermore, the method may include tracking which advertisements are sent to which customers, so that a customer is not sent a single advertisement repetitively to the exclusion of other suitable advertisements. Tracking which advertisements are sent to which customers also allows the billing entity to charge the advertising entity an advertising fee based upon the number of times the advertisement is viewed.

After correlating the item of customer information to the advertisement, the advertisement is retrieved at 18. The advertisement may be retrieved in any desired fashion, depending upon the form in which the advertisement is provided. Typically the advertisement will be stored in an electronic database in a collection of advertisements, and may be retrieved using suitable hardware or software. However, the advertisement may also be stored in hardcopy form and retrieved manually. While the depicted embodiment of the invention is described in the context of correlating and retrieving a single advertisement, method 10 may also include retrieving more than one advertisement to put on the billing statement.

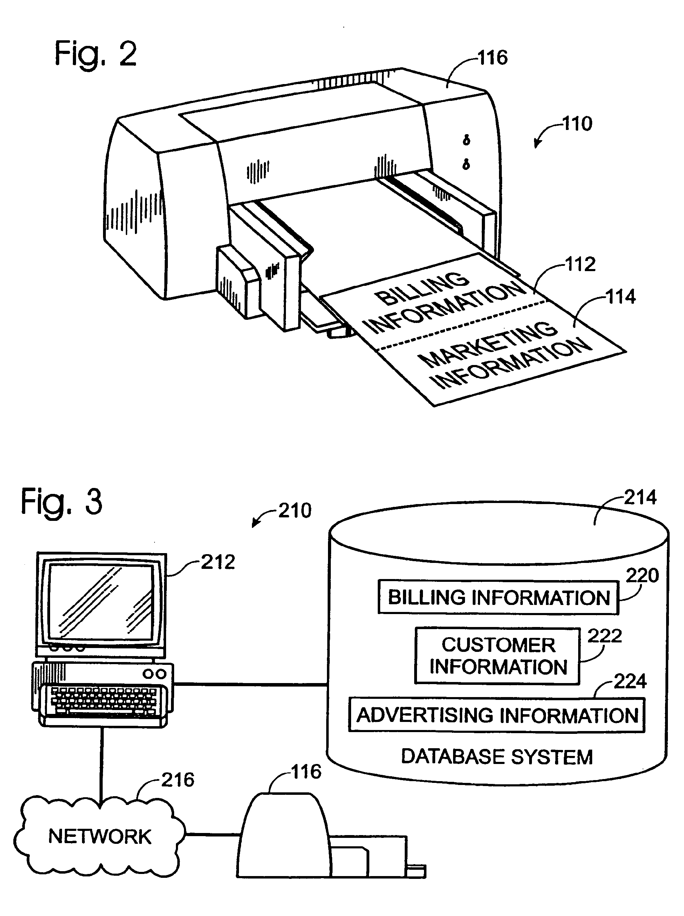

Next, a billing statement containing both the billing information for the customer and the advertisement is formed at 20. The billing statement may be formed in any suitable manner. For example, the billing statement may be either printed on paper for mailing to the customer, or be compiled in electronic form to be accessible by the customer over a computer network. Furthermore, the billing information and the advertisement may be arranged in any desired manner relative to one another on the billing statement. For example, the billing information and the advertisement may be printed on opposite sides of the billing statement to permit a larger advertisement to be printed. Likewise, the billing information and the advertisement may be printed on the same side of the statement, as depicted at 110 in Fig. 2. Billing statement 110 includes a top portion 112 in which billing information is printed, and a bottom portion 114 in which the advertisement is printed. Printing the billing information and the advertisement on the same side of the billing statement increases the chances that the consumer will view the advertisement, and thus may increase the value of the advertising space to both the advertising entity and the billing entity. In the depicted embodiment, billing statement 110 is shown printed by a printer 116, though as mentioned above, it may also be formed electronically.

As described above, method 10 may be practiced in any suitable fashion, but is particularly suited for use with an electronic billing system. An example of a billing system suitable for implementing method 10 is shown generally at 210 in Fig. 3. Billing system 210 includes a computer 212 and a database system 214. Computer 212 may be connected to printer 116 via a network 216, but also may be connected directly to the printer if desired. Network 216 may be a local network that is not accessible by outside users, or may be a wide area network, such as the internet, that allows customers to access their billing statements electronically.

Computer 212 typically is a personal computer (PC) and includes a central processing unit (CPU), an associated memory (RAM, ROM, etc.) and a mass storage device, typically a hard drive, but may alternatively be a CD-ROM or other suitable mass storage device. Software to implement the methods of the present invention is typically stored on the mass storage device and executed by the CPU, utilizing the RAM memory. Alternatively, computer 212 may be another type of computer, such as a mainframe computer, or may be a dedicated hardware device such as a controller. Furthermore, computer 212 may be configured to act as a server, allowing customers to access billing information via a computer network using a standard web browser.

Database system 214 is configured to store the billing information and customer information for each customer, and also to store the advertisements and associated comparative data items for each advertisement. Database system 214 may include any number of individual databases. In the depicted embodiment, database system 214 includes a billing information database 220, a customer information database 222, and an advertising information database 224 including the collection of advertisements and any associated comparative data items. Although database system 214 of the depicted embodiment is organized into three databases, it will be appreciated that the billing information, customer information and advertising information may be organized into any desired database system architecture without departing from the scope of the present invention.

In the depicted embodiment, database system 214 is shown connected directly to computer 212. However, database system 214 may also be connected to computer 212 through a local or wide area network. The use of a wide area network may be particularly advantageous, as it would allow the ownership of billing information database 220, customer information database 222 and advertising information database 224 to be divided between two or more entities. For example, separate entities may own advertising information database 224 and billing information database 220. Under this arrangement, advertisers can pay the owner of advertising information database 224 to list their advertisements in the database. In tum, the entity that owns billing information database 220, or multiple entities, can arrange to access advertising information database 224 to search for advertisements to include on their billing statements. Thus, the billing information database owner can sell advertising space to more than one advertising information database owner, and the advertising information database owner can purchase advertising space from more than one billing information owner.

While the present invention has been particularly shown and described with reference to the foregoing depicted embodiments, those skilled in the art will understand that many variations may be made therein without departing from the spirit and scope of the invention as defined in the following claims. The description of the invention should be understood to include all novel and non-obvious combinations of elements described herein, and claims may be presented in this or a later application to any novel and non-obvious combination of these elements. The foregoing embodiments are illustrative, and no single feature or element is essential to all possible combinations that may be claimed in this or a later application. Where the claims recite "a" or "a first" element or the equivalent thereof, such claims should be understood to include incorporation of one or more such elements, neither requiring nor excluding two or more such elements.

## Claims

1. A method for providing targeted advertising to a customer on the basis of an advertisement selected from a plurality of advertisements, comprising the steps of:
retrieving billing information for the customer (12);
retrieving an item of customer information relating to the customer (14);
correlating the item of customer information to an advertisement (16);
retrieving an advertisement (18); and
forming a billing statement containing the billing information for the customer and the advertisement (20);
wherein the method includes tracking which advertisements are sent to which customers, so that a customer is not sent a single advertisement repetitively to the exclusion of other suitable advertisements.

2. The method of claim 1, further comprising charging an advertising entity an advertising fee based upon the number of times the advertisement is viewed.

3. The method of claim 1 or 2, wherein the customer information includes demographic information.

4. The method of claim 1 or 2, wherein the customer information includes personal information about the customer, the personal information selected from the group consisting of hobbies, interests, spending habits, vacation and leisure preferences, group affiliations, political affiliations and property ownership.

5. The method of claim 1 or 2, wherein the customer information includes information regarding past consumption of goods and services by the customer.

6. The method of claim 1 or 2, further comprising the step of providing a collection of advertisements from which the advertisement is retrieved.

7. The method of claim 6, wherein each of the advertisements has an associated comparative data item that allows the item of customer information to be correlated to the advertisement based upon a relation between the item of customer information and the comparative data item.

8. The method of claim 7, wherein the associated comparative data item includes a keyword list.

9. The method of claim 7, wherein the item of customer information includes a first indicator indicating a preference of a customer, wherein the associated comparative data item includes a second indicator indicating whether the advertisement would appeal to a person with the preference, and wherein the first indicator is compared to the second indicator to correlate the item of customer information to the advertisement.

10. The method of claim 1 or 2, further comprising the step of collecting customer information before retrieving the item of customer information.

11. A billing system for providing targeted marketing to a customer on the basis of an advertisement selected from a plurality of advertisements, comprising:
a database system (214) for storing data, the data including customer billing information (220), customer information (222), and marketing information (224); and
a computer system (212) configured to create customer billing statements, the computer system (212) being configured to:
retrieve customer billing information (220) for a selected customer from the database system (214),
retrieve customer information (222) for the selected customer from the database system (214),
retrieve advertising information (224) correlated to the customer information (222) from the database system (214), and
assemble a billing statement (110) for the selected customer, the billing statement (110) including customer billing information for the selected customer (112) and marketing information correlated to the customer information (114);
wherein the computer system (212) is further being configured to track which advertisements are sent to which customers, so that a customer is not sent a single advertisement repetitively to the exclusion of other suitable advertisements.
